Europäisches Patentamt

European Patent Office

Office européen des brevets

(11) Publication number: **0 326 043**
**A1**

## EUROPEAN PATENT APPLICATION

(21) Application number: **89101012.6**

(22) Date of filing: **20.01.89**

(51) Int. Cl.⁴: **F04B 27/08**

(30) Priority: **22.01.88 JP 10861/88**
**20.10.88 JP 136103/88 U**
**25.10.88 JP 138137/88 U**

(43) Date of publication of application:
**02.08.89 Bulletin 89/31**

(84) Designated Contracting States:
**DE FR GB IT SE**

(71) Applicant: **SANDEN CORPORATION**
**20 Kotobuki-cho**
**Isesaki-shi Gunma, 372(JP)**

(72) Inventor: **Kimura, Shogo**
**1191-3 Oaza-Ohara Yabuzuka-Hon-machi**
**Nitta-gun Gunma, 379-23(JP)**
Inventor: **Kano, Hiroshi**
**752-9 Iizuka-machi**
**Takasaki-shi Gunma, 370(JP)**
Inventor: **Hiraga, Masaharu**
**4-8-34 Honjo**
**Honjo-shi Saitama, 367(JP)**
Inventor: **Takai, Kazuhiko**
**3754-13 Oaza-Moro**
**Isesaki-shi Gunma, 372(JP)**

(74) Representative: **Prüfer, Lutz H., Dipl.-Phys.**
**Harthauser Strasse 25d**
**D-8000 München 90(DE)**

(54) Refrigerant compressor with axial vibration absorption mechanism.

(57) A wobble plate type compressor is disclosed which includes a compressor housing (10) which has a crank chamber (14) and a cylinder block (11). A axial center bore (23) and a plurality of cylinders (27) are axially equiangularly formed around the center bore (23). A front end plate (12) is attached to one end opening of the compressor housing (10). A cylinder head (13) is attached to the other end of the compressor housing (10). A plurality of pistons (28) are slidably fitted within each of the cylinders (27). A cam rotor (16) is disposed on the inner surface of the front end plate (12) through a first thrust bearing (18) to rotate toghether with a drive shaft (15). A wobble plate (19) is coupled to the pistons (28) through connecting rods (29) and disposed on the inclined surface (16a) of the cam rotor (16) through a second thrust bearing (20) to convert rotating motion of the cam rotor (16) into reciprocating motion of the pistons (28). At least one vibration absorption mechanism (38) is disposed to face to at least one of the first thrust bearing (18) and second thrust bearing (20).

FIG. 2

## REFRIGERANT COMPRESSOR WITH AXIAL VIBRATION ABSORPTION MECHANISM

This invention relates to a refrigerant compressor, and more particularly, to a refrigerant compressor with an axial vibration absorption mechanism.

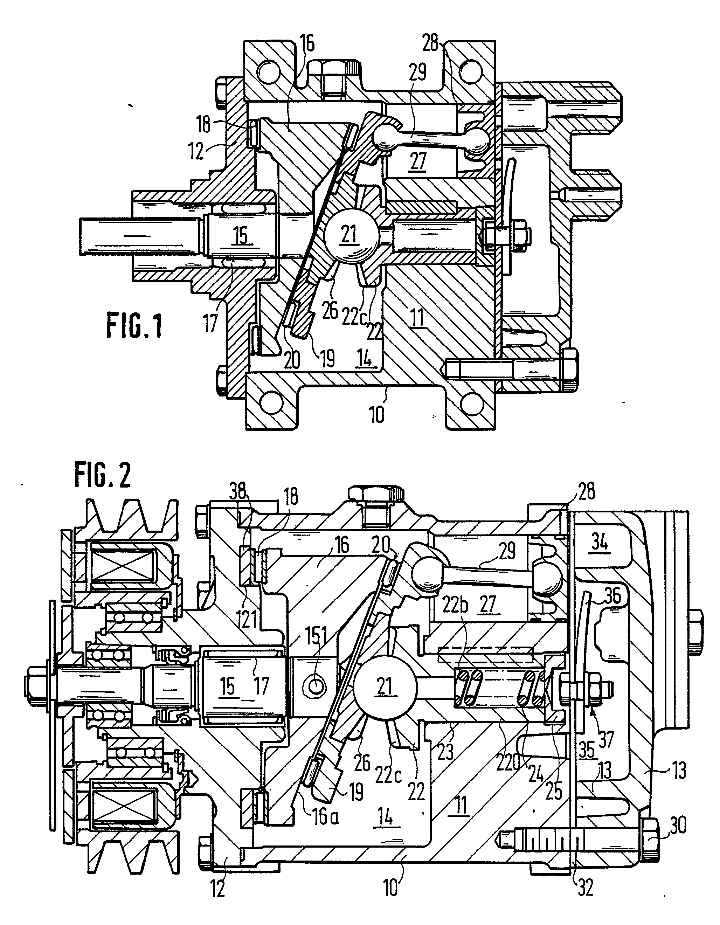

A conventional refrigerant compressor is well known, which is shown in Figure 1, e.g., as which is disclosed in Japanese Utility Model Laid-open Gazette No. 61-147381. The refrigerant compressor includes front end plate 12, rear end plate 13 and compressor housing 10. Front end plate 12 and rear end plate 13 are attached on both ends of compressor housing 10, respectively. Compressor housing 10 is defined into crank chamber 14 and cylinder block 11. Drive shaft 15 extends within crank chamber 14 through radial bearing 17 within front end plate 12 and its inner end is connected to cam rotor 16. Cam rotor 16 is axially rotatably supported on the inner end surface of front end plate 12 through thrust bearing 18 and its other end is rotatably coupled with wobble plate 19 through thrust bearing 20. Wobble plate 19 is urged toward cam rotor 16 with recoil strength of a coil spring (not shown) through supporting member 22 and steel ball 21. Wobble plate 19 is prevented from rotation by the engagement of bevel gears 22c and 26. Suporting member 22 is disposed within cylinder block 11 to axially move and prevented from rotation by key 112. Cylinder block 11 is formed integrally with compression housing 10 and has a plurality of cylinders 27. Piston 28 is recipocatably fitted within each cylinders 27 and is coupled with wobble plate 19 through connecting rod 29.

In the above-mentioned compressor, vibration in the thrust direction occurs based on pressure charged added to piston 28 during suçktion and discharge operation of the compressor and is transmitted to front end plate 12 through wobble plate 19, thrust bearing 20, cam rotor 16 and thrust bearing 18. Thus, vibration is transmitted to compressor housing 10 which is attached to front end pate 12, and may be transmitted into the compartment of a car.

On the other hand, an engine or a car, particularly, a piston type engine has the characteristics that vibration in thrust direction to a crank shaft is relatively small and that in radial direction to the crank shaft is relatively large. Because of the above reasons, the engine is generally consisted to control vibration in radial direction to be largely reduced and vibration in thrust direction to be small reduced.

Accordingly, vibration in thrust direction which occurs in the compressor merges into vibration thrust direction on the engine, and the noise in the compartment of the car may be thus increased.

It is a primary object of the present invention to provide a refrigerant compressor with an axial vibration absorption mechanism which reduces vibration.

It is another object of the present invention to provide a refrigerant compressor with an axial vibration absorption mechanism which reduces noise in a compartment of a car.

It is still another object of the present invention to provide a refrigerant compressor with an axial vibration absorption mechanism which is compact and simple.

A wobble plate type compressor according to the present invention includes a compressor housnig which has a crank chamber and a cylinder block. A axial center bore and a plurality of cylinders are axially equiangularly formed around the center bore. A front end plate is attached to one end opening of the compressor housing. A cylinder head is attached to the other end of the compressor housing. A plurality of pistons are slidably fitted within each of the cylinders. A cam rotor is disposed on the inner surface of the front end plate through a first thrust bearing to rotate toghether with a drive shaft. A wobble plate is coupled to the pistons through connecting rods and disposed on the inclined surface of the cam rotor through a second thrust bearing to convert rotating motion of the cam rotor into reciprocating motion of the pistons. At least one vibration absorption mechanism is disposed to face at least one of the first thrust bearing and second thrust bearing.

Further objects, features and other aspects of this invention will be understood from the following detailed description of the preferred embodiment of this invention referring to the attached drawings.

Figure 1 is a cross-sectional view of a conventional wobble plate type compressor.

Figure 2 is a cross-sectional view of a wobble plate type compressor with an axial vibration absorption mechanism in accordance with a first embodiment of this invention.

Figure 3 is a cross-sectional view of a wobble plate type compressor with an axial vibration absorption mechanism in accordance with a second embodiment of this invention.

Figure 4 is a cross-sectional view of a wobble plate type compressor with an axial vibration absorption mechanism in accordance with a third embodiment of this invention.

Figure 5 is a cross-sectional view of a wobble plate type compressor with a variable displacement mechanism and an axial vibration absorption mechanism in accordance with a fourth embodiment of this invention.

Figure 6 is a cross-sectional view of a wobble plate type compressor with a variable displacement mechanism and an axial vibration absorption mechanism in accordance with a fifth embodiment of this invention.

Figure 7 is an enlarged cross-sectional view of an axial vibration absorption member as shown in Figure 6.

Figures 8 and 9 are modifications of an axial vibration absorption mechanism as shown in Figure 7.

Referring to Figure 2, the construction of a wobble plate type compressor with an axial vibration absorbing machanism in accordance with a first embodiment of this invention is shown.

The same numerals are accorded on the same construction as that of the conventional compressor to simplify the specification.

The compressor has cylinder housing 10 including cylinder block 11, front end plate 12 and cylinder head 13. The interior of housing 10 defines crank chamber 14 between cylinder block 11 and front end plate 12. Drive shaft 15 also is radially supported on the inner surface of front end plate 12 by radial needle bearing 17 in front end plate 12 and extends to cam rotor 16 connected thereto by pin 151 at its inner end. Cam rotor 16 also is supported on the inner surface of front end plate 12 by thrust needle bearing 18. Wobble plate 19 is disposed on inclined surface 16a of rotor 16 through thrust needle bearing 20. Front end plate 12 has annular groove 121 on the inner surface thereof to dispose annular vibration absorption member 38, which is made of elestic materials, such as rubber. Annular vibration absorption member 38 is fixedly disposed in annular groove 121 to receive the axial movement of thrust needle bearing 18. Wobble plate 19 is nonrotatably supported on steel ball 21 seated at an end of supporting member 22.

Supporting member 22 includes shank portion 22a having axial hole 22b at its other end and bevel gear portion 22c at the end of shank portion 22a, the bevel gear portion having a seat for steel ball 21 at the center thereof. Supporting member 22 is axially slidable but non-rotatably supported within cylinder block 11 by the insertion of shank portion 22a into axial hole 23 formed in cylinder block 11. The rotation of supporting member 22 is prevented by means of a key and key groove (not shown). Coil spring 24 is disposed in axial hole 22b of supporting member 22 and the outer 'end of spring 24 is in contact with screw member 25 so that shank portion 22a is urged toward wobble plate 19. Bevel gear portion 22c of supporting member 22 engages with bevel gear 26 mounted on wobble plate 19 so that the rotation of wobble plate 19 is prevented. Steel ball 21 is seated in the seat formed at the central portion of bevel gear 26 so that wobble plate 19 may be nutatably but non-rotatanly supported on steel ball 21.

Cylinder block 11 is provided with a plurality of axial cylinders 27 formed therein, within which pistons 28 are slidably and closely fitted. Each piston 28 is connected to wobble plate 19 through piston rod 29. The ends of piston rods 29 are connected to wobble plate 19 by a plurality of ball joint mechanisms. Similarly, pistons 28 and the other ends of piston rods 29 are also connected by a plurality of ball joint mechanisms.

Cylinder head 13 is disposed on the outer end of cylinder block 11 and is secured thereto by bolts 30. Cylinder head 13 is provided with suction chamber 34 and discharge chamber 35 separated by partition wall 131. Valve plate 32 has suction ports (not shown) conecting suction chamber 34 and cylinders 27 and discharge ports (not shown) connecting discharge chamber 35 and cylinders 27. A suction reed valve and a discharge reed valve are disposed on the both side of valve plate 32, respectively. Stopper plate 36 suppresses excessive deformation of the discharge reed valve. Bolt and nut device 37 secures the suction reed valve, the discharge reed valve and stopper plate 36 to valve plate 32. Cylinder head 13 is secured on the end surface of cylinder block 11 through the valve plate assembly including valve plate 32 and gaskets by bolts 30. Thus, the interior of the compressor is sealed.

In operation of the compressor, drive shaft 16 is driven by any suitable driving source, such as an automobile engine. Rotor 16 rotates with drive shaft 15, so that wobble plate 19 may nutate about steel ball 21 according to the rotation of inclined surface 16a of rotor 16. During operation of the compressor, the gas pressure which acts on piston 28 changes in accordance with suction and compression of refrigerant gas. The changes of the gas pressure is transmitted to thrust needle bearing 18 through piston rod 29, wobble plate 19 and cam rotor 16, and thereafter, is absorbed at vibration absorption member 38. The vibration may be prevented from occuring at vibration absorption member 38.

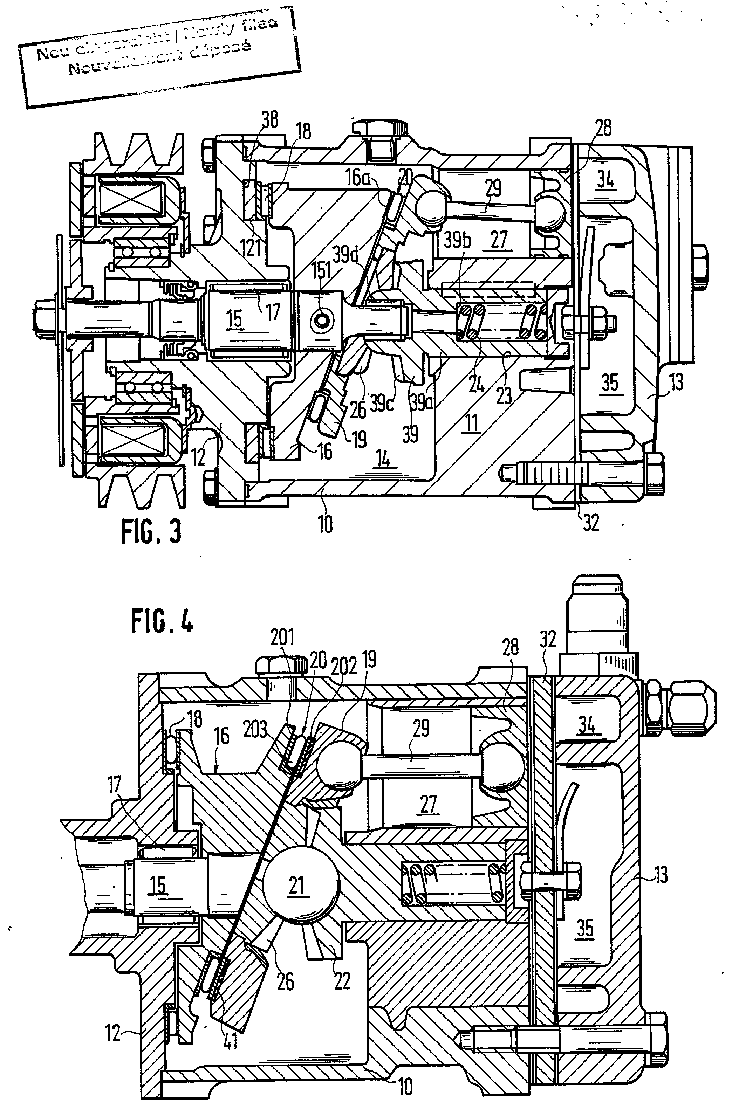

Referring to Figure 3, the construction of a wobble plate type compressor with an axial vibration absorbing mechanism in accordance with a second embodiment of this invention is shown.

Supporting member 39 includes shank portion 39a having axial hole 39 b at its other end and bevel gear portion 39c at the end of shank portion 39a, the bevel gear portion 39c having axial hole 39d for receiving the inner end of drive shaft 40 at the center thereof. Drive shaft 40 extends to radial bearing 39d through front enplate 12, cam rotor 16 and wobble plate 19. Drive shaft 40 is thus radially supported by both ends thereof, front end plate and supporting member 39, thereby securedly radially supporting cam rotor 16 on drive shaft 40.

Referring to Figure 4, the construction of a wobble plate type compressor with an axial vibration absorption mechanism in accordance with a third embodiment of this invention is shown.

Thrust needle bearing 20 which is disposed between cam rotor 16 and wobble plate 19 includes a pair of ring-shaped thrust races 201 and 202, and a plurality of needle bearings 203. Needle bearings 203 are disposed between thrust races 201 and 202. Thrust race 201 is fixedly disposed on inclined surface 16a of cam rotor 16 and thrust race 202 is fixedly on wobble plate 19 through annular vibration absorption member 41.

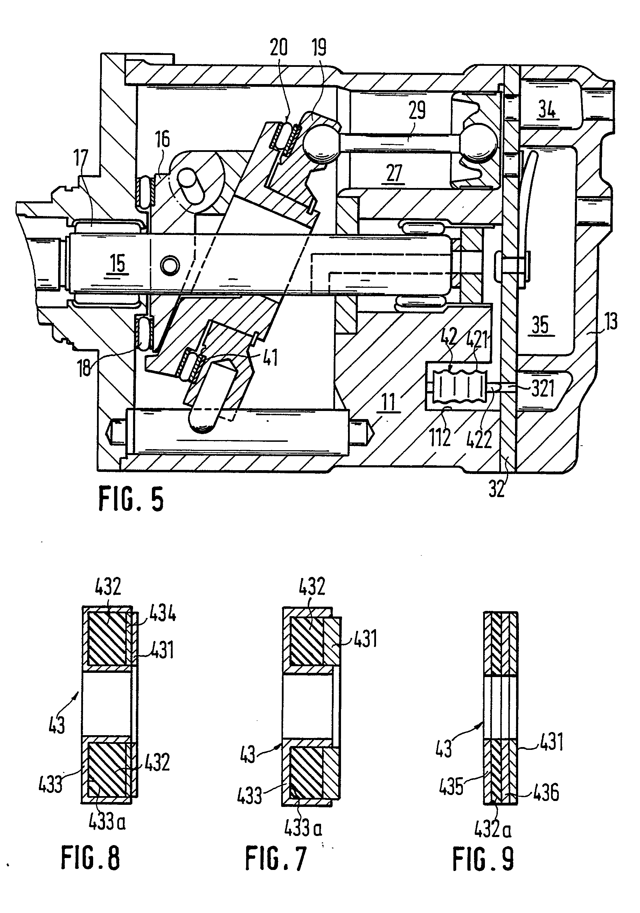

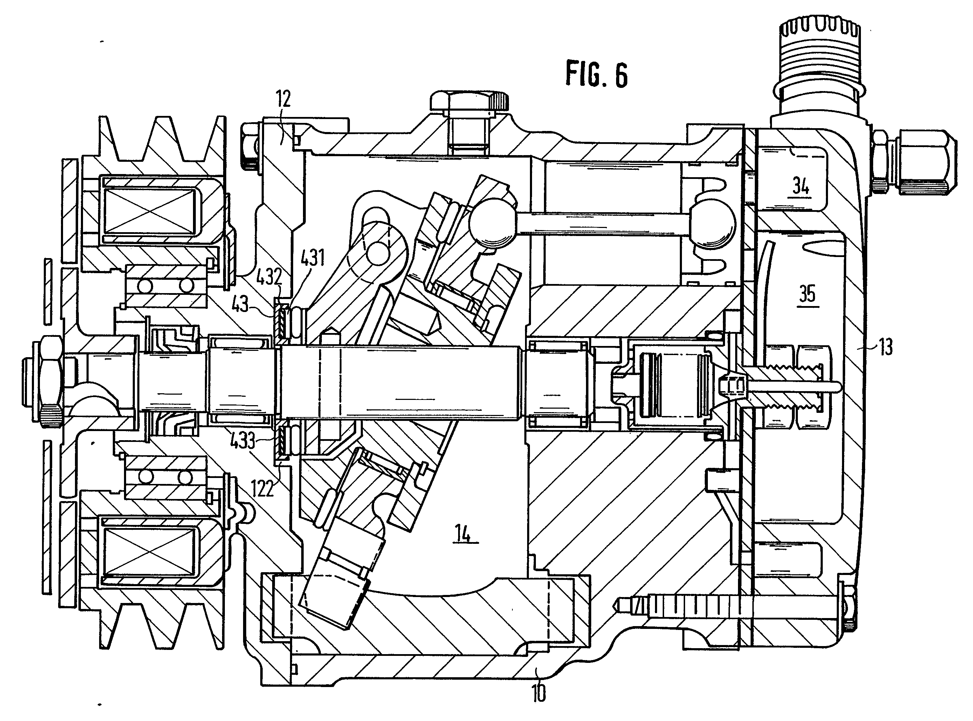

Referring to Figure 5, the construction of a wobble plate type compressor with a variable displacement mechanism and an axial vibration absorption mechanism in accordance with a fourth embodiment of this invention is shown.

Annular vibration absorption member 41 is disposed to be the same position as the compressor in Figure 4. Variable displacement mechanism 42 including bellows 421 and needle valve 422 to open and close opening 321 formed within valve plate 32 is disposed within hollow portion 112 of cylinder block 11.

Referring to Figure 6, the construction of a wobble plate type compressor with a variable displacement mechanism and an axial vibration absorption mechanism in accordance with a fifth embodiment of this invention is shown.

Vibration absorption mechanism 43 which includes first thrust race 431, vibration absorption member 432 which is made of melted elastic materials and annular U-shaped steel plate 433 is fixedly disposed within annular groove 122 formed on the inner surface of front end plate 12. As shown in Figure 7, steel plate 433 is formed to be U-shaped construction with annular groove 433a. Vibration absorption member 432 is charged into annular groove 433a fill therein. Thereafter, the opening of annular groove 433a which is filled with vibration absorption member 432 is closed by first thrust race 431.

Referring to Figures 8 and 9, there is shown a modification of vibration absorption mechanism 43 as shown in Figure 7.

In Figure 8, the opening of annular groove 433a which is filled with vibration absorption member 432 is closed by annular plane plate 434 to prevent from leakage of vibration absorption member 432 and then first thrust race 431 is fixedly disposed on annular plane plate 434. Vibration absorption mechanism 43 as shown in Figure 9 includes annular plane plates 435 and 436, vibration absorption member 432a which is formed of a solid elastic member, such as plastic plate or rubber, and annular first thrust race 431. Vibration absorption member 432a is attached between annular plane plates 435 and 436, then first thrust race 431 is attached to one end surface of annular plane plate 436. In the construction, annular plane plate 436 may be omitted since first thrust race 431 may be used instead of annular plane plate 436.

This invention has been described in detail in connection with a preferred embodiment, but is merely for illustrative purposes only and the invention is not limited thereto. It will be easily understood by those skilled in the art that variations and modifications can be easily made within the scope of this invention as defined by the appended claims.

## Claims

1. In a wobble plate type compressor including a compressor housing having a crank chamber and a cylinder block having an axial center bore and a plurality of cylinders axially equiangularly formed around the center bore, a front end plate attached to one end opening of said compressor housing, a cylinder head attached to the other end of said compressor housing, a plurality of pistons slidably fitted within each of said cylinders, a cam rotor disposed on the inner surface of said front end plate through a first thrust bearing to rotate toghether with a drive shaft, a wobble plate coupled to said pistons through connecting rods and disposed on the inclined surface of said cam rotor through a second thrust bearing to convert rotating motion of said cam rotor into reciprocating motion of said pistons: the improvement comprising at least one vibration absorption means disposed to face to at least one of said first thrust bearing and second thrust bearing.

2. The improvement as claimed in claim 1 wherein said wobble plate type compressor has a variable displacement mechanism.

3. The improvement as claimed in claims 1 and 2 wherein said vibration absorption means is disposed in an annular groove formed on the inner surface of said front end plate.

4. The improvement as claimed in claims 1 and 2 wherein said vibration absorption means is disposed in an annular groove formed on the end surface of said cam rotor.

5. The improvement as claimed in claims 1 and 2 wherein said vibration absorption means is disposed in an annular groove formed on the inclined surface of said cam rotor.

6. The improvement as claimed in claims 1 and 2 wherein said vibration absorption means is disposed in an annular groove formed on the one end of said wobble plate.

7. The improvement as claimed in claims 1-6 whereibn said vibration absorption means is made of elastic materials.

8. The improvement as claimed in claims 1-6 wherein said vibration absorption means comprises an annular U-shaped steel plate including an annular groove, vibration absorption member and a thrust race.

9. The improvement as claimed in claims 1-6wherein said vibration absorption means comprises an annular U-shaped steel plate including an annular groove, a vibration absorption member, an annular plane plate and a thrust race.

10. The improvement as claimed in claims 1-6 wherein said vibration absorption means comprises an annular plane plate, a vibration absorption member and a thrust race, each one attached each other.

**FIG. 1**

**FIG. 2**

FIG. 3

FIG. 4

FIG. 5

FIG. 8

FIG. 7

FIG. 9

FIG. 6

EP 0 326 043 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | GB-A- 860 973 (VASTA DI PIETRO) <br> * Page 1, lines 53-74; page 2, lines 39-46; figures 1-3,9,10 * <br> --- | 1,2,7,10 | F 04 B 27/08 |
| Y | DE-A-3 614 430 (SEISAKUSHO) <br> * Column 5, line 34 - column 8, line 24; figure 1 * <br> --- | 1,2,7,10 | |
| A | US-A-4 042 309 (HIRAGA) <br> * Column 3, line 54 - column 5, line 46; figures 1,2,5 * <br> --- | 1 | |
| A | US-A-4 699 530 (SATOH) <br> * Column 2, lines 43-50; column 3, line 45 - column 4, line 23; figures 1,2 * <br> --- | 1,3-6,8 | |
| A | CH-A- 250 984 (L. VON ROLL'SCHEN) <br> * Page 1, line 61 - page 2, line 52; page 3, lines 16-26; figures 1,8 * <br> --- | 1,7,8 | |
| A | FR-A-2 222 895 (NADELLA) <br> * Page 3, line 19 - page 4, line 6; figure 1 * <br> ----- | 1,7,10 | TECHNICAL FIELDS SEARCHED (Int. Cl.4) <br><br> F 04 B <br> F 01 B |

The present search report has been drawn up for all claims

| Place of search | Date of completion of the search | Examiner |
|---|---|---|
| THE HAGUE | 20-03-1989 | BERTRAND G. |

EPO FORM 1503 03.82 (P0401)